# EUROPEAN PATENT APPLICATION

(11) **EP 4 568 218 A1**
(43) Date of publication of application: **11.06.2025**
(21) Application number: 24213266.0
(22) Date of filing: 15.11.2024
(51) Int. Cl.: H04L 41/142, H04L 41/147, H04L 41/16, H04L 41/5009, H04L 43/08, H04L 41/149, H04L 41/14

(54) **METHODS AND APPARATUS FOR QUANTIFYING PROBABILITY OF EXPECTED NETWORK PERFORMANCE**

(30) Priority: 05.12.2023 US 202363606419 P
(71) Applicant: Nokia Solutions and Networks Oy, 02610 Espoo (FI)
(72) Inventor: ERMAN, Bilgehan, Weehawken (US); CILLI, Bruce, Atlantic Highlands (US); DI MARTINO, Catello, Uberlandia (BR); MILLER, Raymond, Lakeville (US); PAYETTE, Charles, Rehoboth Beach (US)
(74) Representative: Nokia EPO representatives

(57) **Abstract**

Described herein is a a method for evaluating performance of a network comprising a plurality of endpoint devices configured within a region of interest and at least one operations node, wherein the plurality of endpoint devices and the at least one operations node are configured to establish communication to each other for carrying out a service provided by an application installed on at least one of the plurality of endpoint devices, wherein the evaluation is based on determining a confidence interval for a probability of at least one performance indicator associated with the communication between the plurality of endpoint devices and the at least one operations node meeting a pre-determined target, wherein the at least one performance indicator comprises at least one signal-level indicator and/or at least one network-level indicator, wherein the method comprises: obtaining, based on communication-related data transmitted between the plurality of endpoint devices and the at least one operations node, measured values of the at least one performance indicator associated with one or more from the endpoint devices; dividing the region of interest into a plurality of grids based on a distribution of densities of said measured values of the at least one performance indicator within the region of interest, wherein the plurality of grids comprises one or more grids of interest each including at least one of said measured values; for a selected grid of interest, generating predicted values of the at least one performance indicator based on the at least one of said measured values; and for the selected grid of interest, determining said confidence interval based on said measured values and/or said predicted values and based on at least one target value of the at least one performance indicator set by the pre-determined target for the selected grid of interest.

## Description

### TECHNOLOGY

The present disclosure relates to network communications, in particular to assessing network performance.

### BACKGROUND

Any discussion of the background art throughout the specification should in no way be considered as an admission that such art is widely known or forms part of common general knowledge in the field.

In the field, at specific locations, applications operate on wireless endpoint devices with expectation of certain network connectivity performance, which are Key Performance Indicator (KPI) observations in relation to expectations stated in Service Level Agreements (SLA). For example, an SLA may assert that an autonomous truck operating at a mineral mine would need to have wireless network throughput of at least 70 Mbps. In that scenario the throughput would be the KPI and the 70 Mbps would be the SLA target for the KPI.

Products such as a Network Digital Twin (NDT) could for example conduct measurements and tests to predict the SLA assurance probability that will be experienced by the applications as mentioned above. These systems would conduct measurements and tests using fixed or mobile wireless endpoints that may be mounted on Autonomous Guided Vehicles (AGV). For the purpose of this document, such a product platform will be referred to as "the system".

KPI measurements and tests collected by those products / systems are qualified with locational (spatial) references to associate them with the KPI expectations by the applications.

Hence, there is a need to provide functional enhancements to products such as a Network Digital Twin, which could for example collect network KPI data, and conduct network performance tests to provide information about e.g., how mission critical, industrial private wireless networks perform, e.g., from the perspective of enterprise's business performance indicators (BPI).

### SUMMARY

In accordance with a first aspect of the present disclosure, there is provided a method for evaluating performance of a network comprising a plurality of endpoint devices configured within a region of interest and at least one operations node, wherein the plurality of endpoint devices and the at least one operations node are configured to establish communication to each other for carrying out a service provided by an application installed on at least one of the plurality of endpoint devices, wherein the evaluation is based on determining a confidence interval for a probability of at least one performance indicator associated with the communication between the plurality of endpoint devices and the at least one operations node meeting a pre-determined target, wherein the at least one performance indicator comprises at least one signal-level indicator and/or at least one network-level indicator, wherein the method comprises:
obtaining, based on communication-related data transmitted between the plurality of endpoint devices and the at least one operations node, measured values of the at least one performance indicator associated with one or more from the endpoint devices;
dividing the region of interest into a plurality of grids based on a distribution of densities of said measured values of the at least one performance indicator within the region of interest, wherein the plurality of grids comprises one or more grids of interest each including at least one of said measured values;
for a selected grid of interest, generating predicted values of the at least one performance indicator based on the at least one of said measured values; and
for the selected grid of interest, determining said confidence interval based on said measured values and/or said predicted values and based on at least one target value of the at least one performance indicator set by the pre-determined target for the selected grid of interest.

In some examples, the region of interest is two dimensional and is preferably divided based on quadtree or other clustering methods.

In some examples, the region of interest is three dimensional and is preferably divided based on k-d tree or other clustering methods.

In some examples, each grid of interest comprises at least a pre-set number of evaluation values including the at least one of said measured values and/or said generated predicted values.

In some examples, a number of evaluation values in each grid of interest is at least a pre-set number that satisfies a statistical accuracy of computations.

In some examples, the method further comprises additionally determining grids according to different target values of the at least one performance indicator.

In some examples, said predicted values are generated further based on types of the one or more endpoint devices associated with said measured values and/or said generated values, and/or further based on information relating to a configuration of said selected grid of interest.

In some examples, said predicted values are generated based on inputting, into Deep Neural Networks, DNN, the at least one of said measured values and/or types of said one or more endpoint devices and/or information relating to configuration of said selected grid of interest.

In some examples, the DNN has been trained based on minimizing a loss function averaged over pairs of true values of the at least one performance indicator and estimated values of the at least one performance indicator, given training input values of the at least one performance indicator.

In some examples, the confidence interval is determined based on Bayes' theorem, wherein the confidence interval is determined based on a posterior probability of a target event that the pre-determined target is met, given evidences that the at least one of said measured values and/or said generated predicted values meet the pre-determined target, wherein the posterior probability is determined based on a prior belief relating to a probability of the target event and further based on likelihoods of said evidences given the target event.

In some examples, for the determination of the posterior probability, probabilities of evidences are provided with weighting coefficients, wherein preferably a weighting coefficient for probabilities that said predicted values meet the pre-determined target is smaller than a weighting coefficient for probabilities that said measured values meet the pre-determined target.

In some examples, a probability distribution associated with the prior belief and a probability distribution of said likelihoods are conjugate distributions.

In some examples, the probability distribution associated with the prior belief is a Beta distribution, the probability distribution of said likelihoods is a Bernoulli or Binomial distribution, and a probability distribution of the posterior probability is a Beta distribution.

In some examples, the probability distribution of the posterior probability is updated based on the at least one of said measured values and/or said target values and/or said predicted values.

In some examples, the signal level indicators comprise Quality of Service, QoS, indicators relating to performance of L1 and L2 protocol operations, said QoS indicators including one or more of the following: Received Signal Strength Indicator, RSSI, Reference Signal Received Power, RSRP, Reference Signal Received Quality, RSRQ, and Signal to Interference plus Noise Ratio, SINR.

In some examples, the network level indicators comprise QoS and/or Quality of Experience, QoE, indicators relating to performance of application level operations, said QoS and/or QoE indicators including one or more of the following: throughput, latency, packet loss.

In some examples, the method comprises obtaining measured values at a pre-configured time interval, and obtaining generated values based on measured values collected from one or more said pre-configured time intervals, wherein the pre-configured time interval is preferably 1 to 10s.

In some examples, the pre-determined target is provided in a service-level agreement.

In accordance with a second aspect of the present disclosure, there is provided an apparatus, configured to carry out the method according to any one of the above first aspect and the related examples.

In accordance with a third aspect of the present disclosure, there is provided a system, comprising a network including a plurality of endpoint devices configured within a region of interest and at least one operations node, and further comprising an apparatus according to the second aspect, wherein the plurality of endpoint devices and the at least one operations node are configured to establish communication to each other for carrying out a service provided by an application installed on at least one of the plurality of endpoint devices.

In some examples, the endpoint devices are configured on manufacturing devices and/or vehicles configured to operate within the region of interest.

In accordance with a fourth aspect of the present disclosure, there is provided a computer program comprising instructions for causing an apparatus to perform the method according to the first aspect and the related examples.

In accordance with a fifth aspect of the present disclosure, there is provided a memory storing computer readable instructions for causing an apparatus to perform the method according to the first aspect and the related examples.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an example of a network performace evaluation method according to an example embodiment of the present disclosure;
Figure 2 schematically illustrates an example of a network performace evaluation method according to an example embodiment of the present disclosure;
Figure 3 schematically illustrates examples of KPI data grouped with dynamic grid structure with the example of the Quadtree according to an example embodiment of the present disclosure;
Figure 4 schematically illustrates an example of prediction of Service KPIs from Radio KPIs using DNN regression according to an example embodiment of the present disclosure;
Figure 5 schematically illustrates examples of Service KPI to Radio KPI correlations according to an example embodiment of the present disclosure;
Figure 6 schematically illustrates an example Confidence Interval computation using Bayes Belief model according to an example embodiment of the present disclosure;
Figure 7 schematically illustrates example dependencies between the probability parameters in the CI calculation according to an example embodiment of the present disclosure;
Figure 8 schematically illustrates an example NDTF microservices platform used for the implementation of an example embodiment of the present disclosure;
Figure 9 schematically illustrates an example histogram of Service KPI measurements according to an example embodiment of the present disclosure;
Figure 10 schematically illustrates an example histogram of Service KPI predictions from Radio KPIs according to an example embodiment of the present disclosure;
Figure 11 schematically illustrates an example of CI computation results according to an example embodiment of the present disclosure; and
Figure 12 schematically illustrates an example of CI computation results according to an example embodiment of the present disclosure.

### DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or applicati on capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   - The function split in this option is similar to the 1A architecture in DC. RRC is in the central unit. PDCP, RLC, MAC, physical layer and RF are in the distributed unit.
Option 2 (3C-like split):
   - The function split in this option is similar to the 3C architecture in DC. RRC and PDCP are in the central unit. RLC, MAC, physical layer and RF are in the distributed unit.
Option 3 (intra RLC split):
   - Low RLC (partial function of RLC), MAC, physical layer and RF are in the distributed unit. PDCP and high RLC (the other partial function of RLC) are in the central unit.
Option 4 (RLC-MAC split):
   - MAC, physical layer and RF are in the distributed unit. PDCP and RLC are in the central unit.
Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:
- store the AS context;
- transfer unicast data to/from the UE;
- monitor control channels associated with the shared data channel to determine if data is scheduled for the data channel;
- provide channel quality and feedback information;
- perform neighboring cell measurements and measurement reporting.

The RRC protocol includes e.g. the following main functions:
- RRC connection control;
- measurement configuration and reporting;
- establishment/modification/release of measurement configuration (e.g. intra-frequency, inter-frequency and inter-RAT measurements);
- setup and release of measurement gaps;
- measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

As illustrated above, the present disclosure generally seeks to provide improvement in the assessment or evaluation of network performance.

Network Digital Twin solutions for example aim at providing assessment of network performance in relation to meeting business goals. To be able to do that, the solution should be able to quantify if SLA commitments are being met or not with a specific probability tied to a desired Confidence Interval (CI). This computation is not trivial because variety of input factors like the following play a role:
1. Definition of "location" references, this may be a grid structure where measurements are aggregated in each grid elements:
   a. Granularity, KPI density in each grid element, e.g. 1 meter cube squares
   b. Varying grid sizes across the space depending on the density of the KPI value
2. Not having enough number of data samples
3. Service KPI measurements at a given location and their probabilistic influence on the SLA assurance expectation (such as bandwidth and latency tests)
4. Radio KPI measurements at given locations (such as RSRP, RSRQ)
5. Service KPI predictions from Radio KPI measurements and their probabilistic influence on the SLA assurance expectation
6. Being able to build a reliable statistical model to quantify SLA assurance probability when the probability is close to 1 and that number network measurements are limited

In view of the above, it is more specifically the goal of the present disclosure to provide improvement in the network performance evaluation that is e.g., performed by an NDT, for evaluating whether in a certain area or at a given location, the SLA targets are (or expected to be) met based on (limited number of) measurements relating to the performance indicators collected e.g., from a certain period of time, in particular in the improvement in accuracy and reliability of the determination of the SLA assurance probability.

As background material:
**Network Digital Twin (NDT):** By conducting measurements and running tests in the field, an NDT system could for example provide reports to enterprise customers showing how their private wireless network is performing from the perspective of its impact on their business operation.
**GeoSynthesis:** A GeoSynthesis tool is a solution for delivery of Enhanced Field Performance Validation (EFPV) service, which is designed to replace drive testing through utilization of the 3GPP Minimization of Drive Test (MDT) feature, retrieving the required data from the network via DCAP, which collects this data from the base stations.
**Spatial indexing with Quadtrees:** An algorithmic technique used to create adaptively sized grid structures for data aggregation with similar count in each grid.
**Bayes' Theorem:** In probability theory, Bayes' theorem describes the probability of an event, based on prior knowledge of conditions that might be related to the event.

In view of the above, it is proposed in accordance with the present disclousure a novel way of bringing together one or more of the three conceptual techniques:
- Spatial grouping and indexing of multiple KPI values in association with equal sized dynamic grids
- Service KPI predictions from radio KPI measurements to substantially increase the number of data samples
- Creating a Bayesian Belief model to compute Confidence Interval (CI) assurance predictions

The following parameters that may be found in the specification and/or the drawing figures are defined as follows:
*K:* random variable for KPI values
*τ*: target K for SLA assurance
*A:* P(predicted *K* ≥ *τ*)
*B:* P(measured *K* ≥ *τ*)
*p:* P(SLA assurance | *A,B)*
*Ap:* the weight of A's influence on p
*Bp:* the weight of B's influence on p
*Qs:* number of per-cell KPI values
*Qi:* Quadtree spatial index

- *K*: represents the radio and service KPIs as a random variable
- *τ*: is the KPI value specified within SLA as target value that a KPI should not be higher or lower than depending on its semantic nature. For the purposes of this document, K will be expected to be greater than *τ*
- *A*: is the probability event of predicted KPI value being greater than *τ* as specified by SLA
- *B*: is the probability event of measured KPI value being greater than *τ* as specified by SLA
- *p*: is the CI probability that SLA requirements will be met given A and B events
- *Ap*: is the weight of how *A* events influences p (weights come into view in the way they contribute to the Bayes formulation). Empirical results will allow revising the *Bp,* but initially, it is assumed to be .7
- *Bp*: is the weight of how *B* events influences p (weights come into view in the way they contribute to the Bayes formulation). Empirical results will allow revising the *Bp,* but initially, it is assumed to be .95
- *Qs*: is the approximate number of KPI values expected to be in each grid cell
- *Qi*: is the index that determines a group of K values, grouped in a way such that each grid cell has similar number of K values

References are now made to the figures. In particular, it is to be noted that identical or like reference numbers used in the figures of the present disclosure may, unless indicated otherwise, indicate identical or like elements, such that repeated description thereof may be omitted for reasons of conciseness.

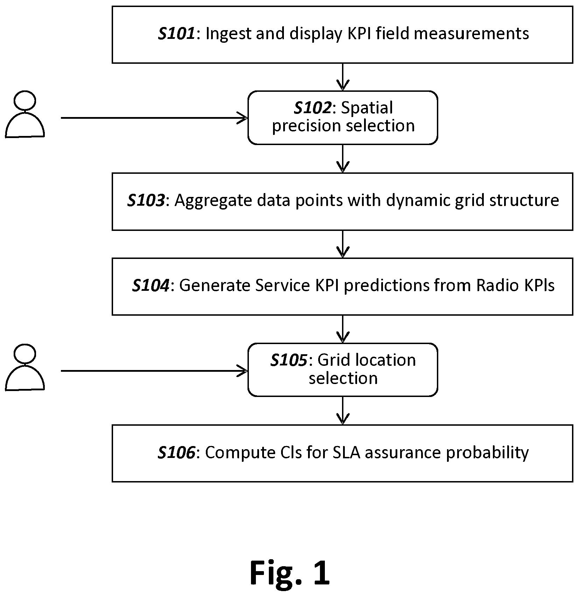

Figure 1 schematically illustrates the steps of an example embodiment method workflow according to an example embodiment of the present disclosure.

The method may be performed by an apparatus on which the NDT is running. The method may additionally or alternatively be performed by an apparatus accessing the NDT in the cloud. Such an appratus may be a computing device, including e.g., a computer, a laptop, a mobile phone and etc.

The process starts at step S101 by collection and ingestion of data into the system repository, e.g., included in or attached to the aforementioned appratus.

Optionally, when viewing the data, the system user may at step S102 make choices about which spatial region they will view and with what precision. A spatial region may be two-dimenional or three dimensional. Step S102 is optional, wherein the to be assessed spatial region and/or the precision may be a default setting.

Based on the precision selected by the user or based on the default precision, at step S103 the dynamic grid structure is created and the existing, available KPI data points are aggregated equally to grid cells. Preferably, the selected or default spatial region is divided into grids based on the collected KPI data points, wherein for example at least a certain number of grids each include more than a pre-set number of KPI data points.

Here, with brevity in mind, example embodiment methods are described using 2D coordinates as example. It should be noted that same methods are applicable for higher dimensions of data representation.

Then at step S104 using DNN regression, new Service KPI predictions are generated from the existing Service KPI tests and the Radio KPI measurements. Due to the limited number of the Radio KPI measurements, predicted new Service KPI values provide more data samples for determining the CI.

Then at steps S105 and S106 CIs are computed for SLA assurance probability when the user selects a location or a set of locations on the grid structure. In the above-mentioned spatial region, a more refined selection may be provided, such that only locations of interest are evaluated. A location of interest may include one or more of the grids. In this context, the definition of a "location" is based on a grid structure. Preferably, a grid of interest includes more than a pre-set number of KPI data points (measured values and/or otherwise obtained values e.g., predicted values), which satisfies statistical accuracy of computations, so as to improve accuracy of the CI computations based on the KPI data points in said grid of interest.

Widely used rule of thumb values such as 20 or 30 can be used for the pre-set number of KPI data points in the grid of interest, or the set value can be refined based on historical data that is collected as the system operates and starts to collect performance data.

The above described method nay be implemented on a Network Digital Twinning Framework (NDTF) with microservices.

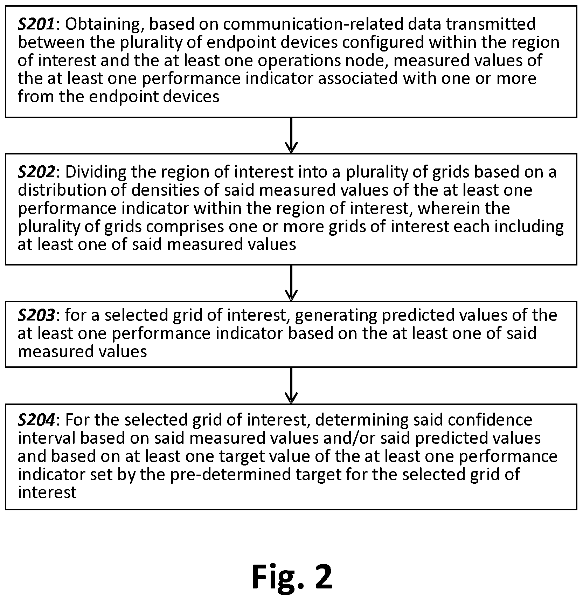

Figure 2 schematically illustrates a further example of a network performace evaluation method according to an example embodiment of the present disclosure. The above descritption relating to Figure 1 can be applied to Figure 2, in particular in the configuration relating to the grid structure, the obtaining of KPI data points and the computation of the CI or the SLA assurance probability.

The method may be performed by an apparatus as described above for Figure 1.

The method is for evaluating performance of a network comprising a plurality of endpoint devices configured within a region of interest and at least one operations node. The region of interest may a spatial region selected as described for Figure 1.

According to the present disclosure, the plurality of endpoint devices and the at least one operations node are configured to establish communication to each other for carrying out a service provided by an application installed on at least one of the plurality of endpoint devices. The application may be an industrial application for performing tasks in e.g., a factory. The application is installed in least one of the endpoint devices. The communication may involve one or more of the endpoint devices and the at least one operations node, wherein the service is carried out by means of said communication. According to the present disclosure, there may be multiple operations nodes. An operations node may be the apparatus as described above for Figure 1. Additonally or alternatively, the operations node is a virtual node that is accessible via wired or wireless connection e.g., by the apparatus as described above for Figure 1. Additonally or alternatively, the operations node is accessible vie the Cloud e.g., by the apparatus as described above for Figure 1. Additonally or alternatively, an NDTF is installed or running in the operations node. An endpoint device may be a device that performs an operation within the region of interest. Additonally or alternatively, an endpoint device is a machine or a vehicle operating within the region of interest.

According to the present disclosure, the evaluation of the network performance may be based on determining an SLA ssurance probability, i.e., a probability of an SLA target being met by the network performance. The SLA target may include latency, throughout and packet loss (rate) of the network, in particular when providing the aforementioned service by the installed application.

More specifically, the evaluation of the network performance is based on a confidence interval for a probability of at least one performance indicator associated with the communication between the plurality of endpoint devices and the at least one operations node meeting a pre-determined target, wherein the at least one performance indicator comprises at least one signal-level indicator and/or at least one network-level indicator.

A signal-level indicator, or a Radio KPI, Radio KPIs preferably refers to QoS measurements indicating the wireless access network performance for L1 and L2 protocol operations, such as RSRQ, RSRP. In other words, signal-level indicators provide measurement of the communication quality on a signal level, i.e., the signal transmission quality between one or more of the endpoint devices and the at least one operations node.

A network-level indicator, or a Service KPIs QoS/QoE measurements indicating the application-level operations, such as Throughput, Latency for QoS, and such as Connection reliability for QoE. In other words, network-level indicators provide measurement of the communication quality on a network/application/service level, i.e., the network performance in the service delivery.

Whether an SLA target is met may be evaluated based on whether a pre-determined target value set by the SLA target is met. For example, the pre-determined target value may a upper limit or a lower limit of a performance indicator, i.e., a KPI.

Acording to the present disclosure, there are four types of values involved: signal-level indicators, network-level indicators, predicted network-level indicators (derived from signal-level indicators), and SLA target-level indicators (which serve as benchmarks for the other three types).

More specifically, according to the present disclosure, the method comprises the following steps:

At step S201: obtaining, based on communication-related data transmitted between the plurality of endpoint devices and the at least one operations node, measured values of the at least one performance indicator associated with one or more from the endpoint devices.

Therein, the communication-related data may include test data transmitted between the at least one operations node and one or more of the plurality of endpoint devices. The measured values may be obtained based on said test data transmission.

The system may take KPI measurements at set intervals such as 1 to 10 seconds. Additional tests may be conducted on demand or on less frequent intervals such as every 10 minutes.

At step S202: dividing the region of interest into a plurality of grids based on a distribution of densities of said measured values of the at least one performance indicator within the region of interest, wherein the plurality of grids comprises one or more grids of interest each including at least one of said measured values. Therein, a grid of interest may include at least a pre-set number of measured values, such that a pre-configured accuracy of computations can be met.

Therein, the region of interest may be two-dimensional or three-dimensional. A two-dimensional region of interest may be divided based on quadtree or other clustering methods. A three-dimensional and is preferably region of interest may be divided based on k-d tree or other clustering methods. The grid structure of the region of interest is therefore dynamically provided as it depends on the obtained measured values, more specifically the density distribution of the measured values within the region of interest. Therefore, such a dynamic grid structure provides accurate reflection and modelling of the measurement result obtained in the network.

At step S203: for a selected grid of interest, generating predicted values of the at least one performance indicator based on the at least one of said measured values. As the number of measured values obtained within a certain period of time, for example, during a plurality of tests performed by the at least one operations node, may be limited and therefore insufficient for an accurate and reliable performance evaluation, it is proposed in accordance with the present disclosure to obtain predicted values of the at least one performance indicator based also on predicted further values in e.g., a selected grid of interest. As a result, evaluation of network performace can be perfomed based on more data samples, so as to improve the evaluation accuracy.

The purpose of gridding is to identify spatial regions within the dataset where confidence interval (CI) calculations can be performed accurately - specifically targeting regions with at least *K* data points to enable meaningful statistical analysis. If the operator / user is interested in assessing the overall network performance, all grid regions will be relevant. However, for insights on network performance in a particular area, only the grids within that specific region will be of interest.

At step S204: for the selected grid of interest, determining said confidence interval based on said measured values and/or said predicted values and based on at least one target value of the at least one performance indicator set by the pre-determined target for the selected grid of interest. Based on the collected measured values and/or the correspondingly obtained predicted values, it may be determined whether the pre-determined target have been or will be met, in that it may be determined whether at least one target value of the at least one performance indicator is met by the collected measured values and/or the correspondingly obtained predicted values.

Preferably, performance-related measurement data is collected periodically. CI can also be computed at regular intervals to identify regions of the network where SLA targets may be violated. However, since CI calculations can be computationally intensive, their frequency may be adjusted based on network regions. Some regions may require more frequent CI calculations than others. Additionally, depending on the computational cost, future predictions may be executed on demand, particularly for specific network segments where planned business operations are expected.

In addition, the determination of the grid structure may also depend on the SLA targets or target values set for different locations or regions. For example, a small region of the network may have more stringent SLA requirements where a separate grid computation may be done for more accurate CI computation.

The above-mentioned three aspects are described in more details in the following, namely dynamic grid structure, Service KPI predictions and CI assurance predictions based on a Bayesian Belief model.

An example embodiment brings together one or more of the following steps:
1. Grid structure creation
2. Service KPI prediction
3. CI computation.

### Grid Structure Creation:

In an example embodiment, the process starts by retrieving a group of KPI data from an Area of Interest (AoI) with a given width and height, which can be defined in any coordinate units. For example, this may be data collected at an open pit mine with devices mounted on autonomous trucks. Each data point would have x, y coordinates, a KPI value, timestamp, and other attributes as relevant to its semantics. Those skilled in the art can easily see how this could be extended to three dimensions with x, y, and z coordinates.

Across the AoI, the density of data points will vary. For the computation and presentation of CI probabilities, a certain level of granularity will be of interest (by the user of the system). Therefore, depending on the space granularity of the collected data, the analysis will use smallest grid size to aggregate the data points. This is the Qs value as listed in the parameter definition set.

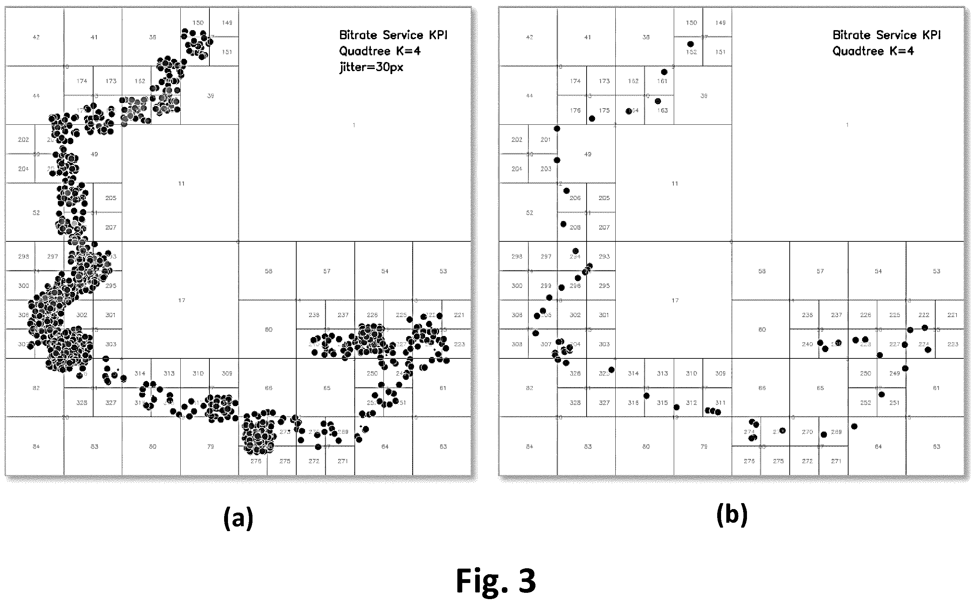

Quadtree algorithm is used to cluster the data points into varying sizes of girds, as seen in Figure 3 showing KPI data grouped with dynamic grid structure with the example of the Quadtree. Each grid in this structure can be indexed using methods that would be familiar to the skilled in the art. Each such index is represented with the variable Qi as defined in the set of parameters earlier.

The granularity and the shape of the dynamic grid structures are determined by measurements obtained by applying probability theory, and accounting for the spatial density of the measurement points and predictions. Figure 3 shows an example of these different measurement densities at different points. Figure 3(a) shows grouped KIP data with jitter added at each point, and Figure 3(b) shows grouped KIP data with original locations.

The example in Figure 3 applie to two-dimensional regions using Quadtree, wherein other appropriate clustering methods for two-dimensional regions may additionally or alternatively be applied. Quadtree algorithm is a solution for two dimensional space. However, it should be noted that for higher dimensions, similar algorithms such as k-d trees can be used.

With creation of the structure, each step in the subsequent methods will now refer to one grid indexed by Qi as the "location". So Qs KPI measurements at the Qi location would be used in the subsequent steps as "measurements at a location".

### Service KPI Prediction:

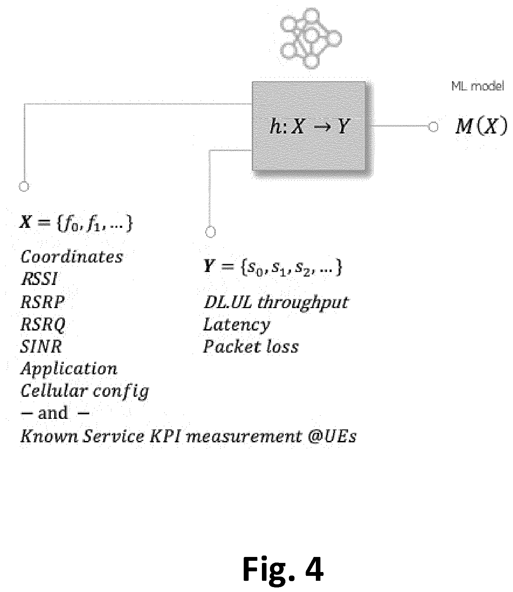

Figure 4 schematically illustrates using Deep neural network techniques to predict service KPIs from more readily available radio KPIs to increase the number data samples.

As mentioned earlier, there will be many Radio KPI (rKPI) measurements, but not as many Service KPI (sKPI) measurements. However, there is a known correlation between the rKPI measurements and sKPI tests. Therefore, more sKPI values can be created by predicting them from rKPI values. Deep Neural Networks (DNN) regression techniques may be applied to provide these predictions. The formulation of this technique is as follows:

| | |
|---|---|
| M : X → Y, | the DNN mapping function |
| x = {k₀, k₁,..., ρ_{c}}, | Radio KPI and cell configurations as the input feature set |
| X = {x_{(l,d)} \| l ∈ L, d e D}, | for x at locations l and for device types d |
| L(y,y') = L(y, M(x)), | training with loss function L with output estimates y' |
| k'_{(l,d)} = M(x), | inference from the model is the Service KPI estimate at location l, and for any set of constraints from the training set, such as device type D |

Therein:
*M* is the deep neural network mapping function that maps from an input space *X* to an output space *Y.*
*X* is the input space composed of input vectors _{(*l*,)} representing known Radio KPIs, and cell configurations at locations denoted by *l* and for device types denoted by *d.*
*Y* is the output space composed of vector *y*_{(*l,d*)} for known Service KPIs used as training labels, and output vector *y'*(_{*l,d*)} as the Service KPI predictions at location *l* and for device type *d.*
L is the loss function used to train the model, taking actual *y* measures as label and the estimated output k', where (x) can generate the output k', the Service KPI prediction.

For each input vector _{(*l*,)} in *X,* the DNN is able to compute an output vector *y'*_{(*l,d*)} *= M*(*x*_{(*l,d*)}). Here, *M* represents a composition of functions associated with each layer of the network. These functions include linear transformations characterized by layer-specific weights and biases, and non-linear activation functions.

During training, the parameters of *M* are adjusted to minimize the loss function (_{(*l*,)}, *y*'_{(*l*,*d*)}) averaged over all pairs of actual and estimated output vectors for all *l* in L and *d* in *D.*

After training, the DNN *M* can be used to make predictions: given a new input vector _{(*l,*)}, the DNN can predict the output vector k'_{(*l,d*)} = *M*(*x*_{(*l,d*)}), which represents the estimated Service KPI at location *l* and for device type *d.*

As shown in Figure 4, the input at the DNN for the training and the prediction of the service KPIs may include one or more of: information relating to the location information of the KPIs (e.g., the coordinates of the grids), the measurements relating to the radio KPIs (including e.g., RSSI, RSRP, RSRP, SINR and etc.), the (type of the) installed application in the endpoint devices, the configuration information relating to the grids, any known service KPI measurements at the endpoint devices, the true service KPI measurements (including DL/UL throughput, latency, packet loss and etc.) obtained at the endpoint devices and/or the at least one operations node.

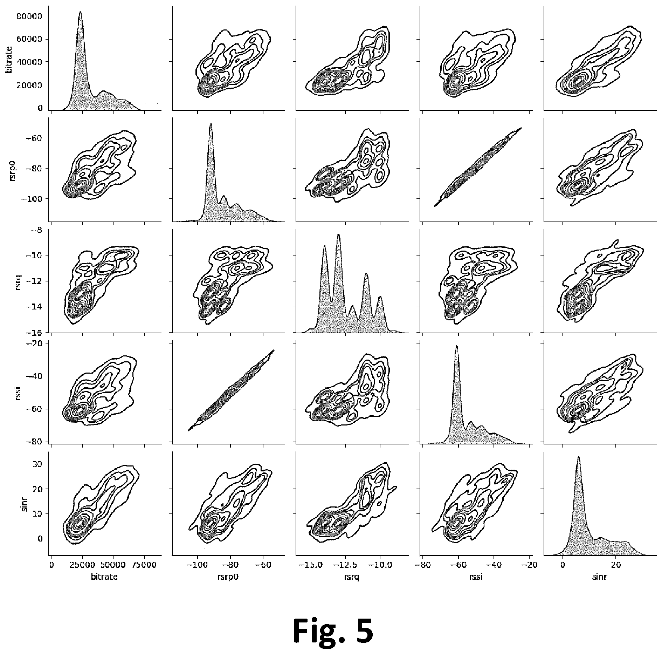

Figure 5 shows example Service KPI to Radio KPI Correlations.

### CI Computation:

The CI computation is preferably done by fitting SLA assurance events as a Binomial distribution, and prior and posterior beliefs as Beta distribution. This makes it significantly easy to find the desired probability quantification with minimal computation (without any approximations).

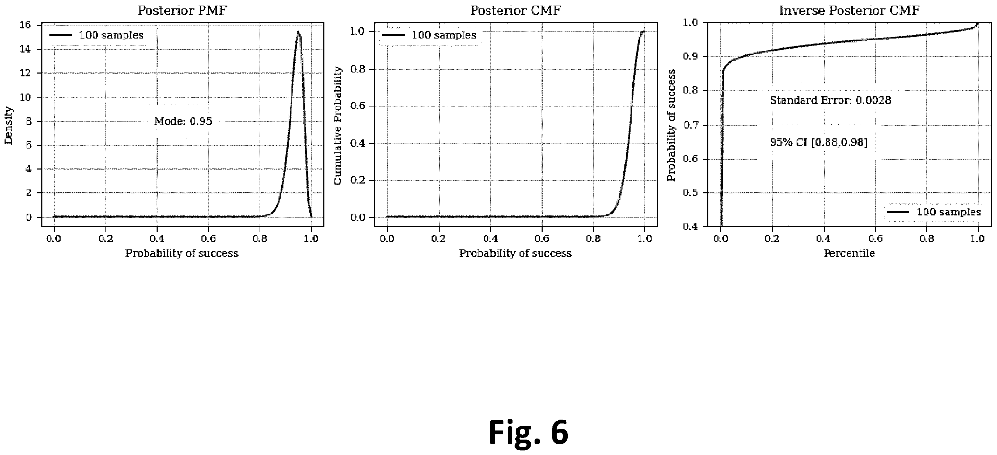

Figure 6 shows an example Confidence Interval computation using Bayes Belief model.

The goal is to quantify the SLA assurance probabilities, such as being able to say, "with 95% confidence, the performance of the network is expected to be such that the probability of meeting the SLA requirements for a given KPI will be between 86% to 97%". This statement will be dependent on the number of measurements, the Qs, at a given location that would be the Qi indexed grid cell.

The non-trivial aspect of this type of computation is that 1) in a reliable network, the SLA assurance probability is going to be close to 1.0, which makes it difficult to use Gaussian approximations, 2) in many field scenarios, there will be limited number of input data samples available, which also makes the Gaussian approximations difficult, and 3) the input data will be comprised of both KPI predictions and KPI measurements with different levels of expected influence on the SLA assurance probability.

Using a frequentist statistical approach for this problem would fail for all three reasons listed above.

A better alternative is to use Bayes' theorem to create a specific model for this problem.

Bayes' theorem formulates the probability problem as follows:
**Posterior:** the probability of a target event given other events
**Prior:** the prior belief about the probability of the posterior, the target event
**Likelihood:** the probability of other events given the posterior
**Evidence:** all possible probabilities of the other events

The relatively complex nature of the Bayes' theorem won't be explained here further, since they are known to the skilled person in the art, but the key notion that has been instrumental in the present disclosure is described as follows:

The idea behind the specific model is to use conjugate distributions with the prior and the likelihood, which will give the posterior as a known distribution from which the percentile probabilities of SLA assurances can be directly read.

In Bayesian statistics, a conjugate prior of a likelihood function is a prior which, when used in combination with the given likelihood, returns a posterior distribution that is in the same family as the prior distribution.

When a Beta distribution is used the prior, and given a Bernoulli or Binomial likelihood (which are often used for events like "a condition is met or not"), the posterior distribution is also a Beta distribution. This is due to the fact that the Beta distribution is the conjugate prior for the Bernoulli and Binomial distributions of the likelihood.

The occurrences of the A and B events (KPIs being above a target, as descriibed in the definitions of the parameters) fits well to Binomial distribution as the likelihood. Then the prior reflects the historical A and B events, which are updated as new events that stream in during system operation. A Beta distribution can represent the posterior distribution that is being continuously updated as will be explained later. These assumptions allow to read the probabilities of the SLA CIs directly off the posterior Beta distribution.

In this model, the "evidence" part of the Bayesian model can be ignored because it is just a scaling factor that does not change the shape of the posterior distribution's PDF (probability distribution function).

It should also be noted that the KPI measurement events are samples from the same data distribution domain (statistically identical), and they are independent probability events because one measurement does not alter the probability of a subsequent measurement. Therefore the Independent and identically distributed property (IID) conditions are met.

The general updating rule for the prior is as follows:
The prior distribution is Beta(α, β)
It is observed 'success' (condition met) s times and 'failure' (condition not met) f times,
Then the posterior is Beta(α+s, β+f)

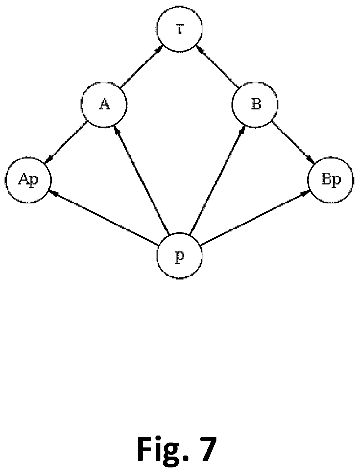

The above specific updating rule may optionally incorporate different update ratios of *Ap* and *Bp* depending on if the event is A (predicted pKPI) or the event is B (measured sKPI) respectively. Figure 7 depicts the dependencies between the above parameters *τ , A, B, p, Ap and Bp* as provided in the above definitions of parameters, for the determination of the CI based on the Bayes' theorem when considering the weighting coefficients attributed to the events when the measured KPI values meet the pre-determined target and to the events when the predicted KPI values meet the pre-determined target. Preferably, the weighting coefficients attributed to the events when the measured KPI values meet the pre-determined target are larger than those for the the events relating to the predicted KPI values, as in principle predicted values are not as accurate as measured values. By considering the contributions to the calculation of the CI based on the measured and the predicted values, the accuracy and reliability of the calculation is furthermore improved.

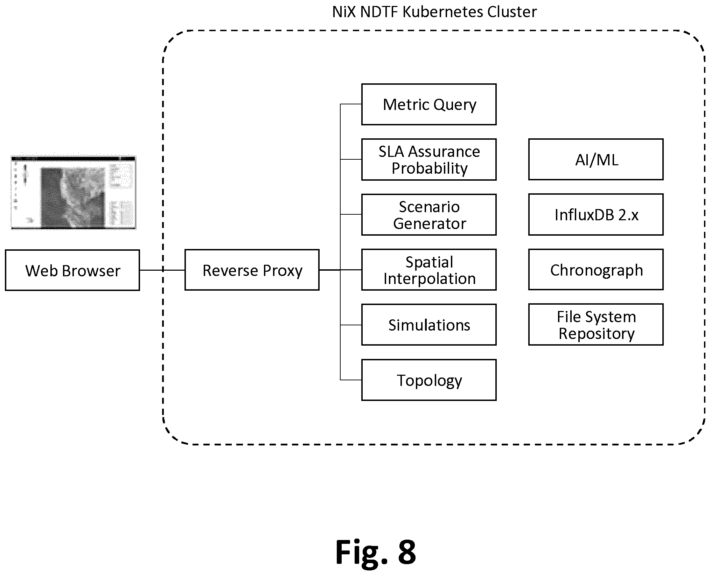

Figure 8 shows an implementation example of the above method according to the present disclosure including microservice components. Therein:
The **Grid Structure Creation** is implemented by the **Metric Query** service module.
The **Service KPI Prediction** using DNN methods is implemented in the **AI/ML** service module.
The **CI Computation** is implemented in the **SLA Assurance Probability** module.
The **Scenario Generator** service module is used to generate the data used for the experiments.

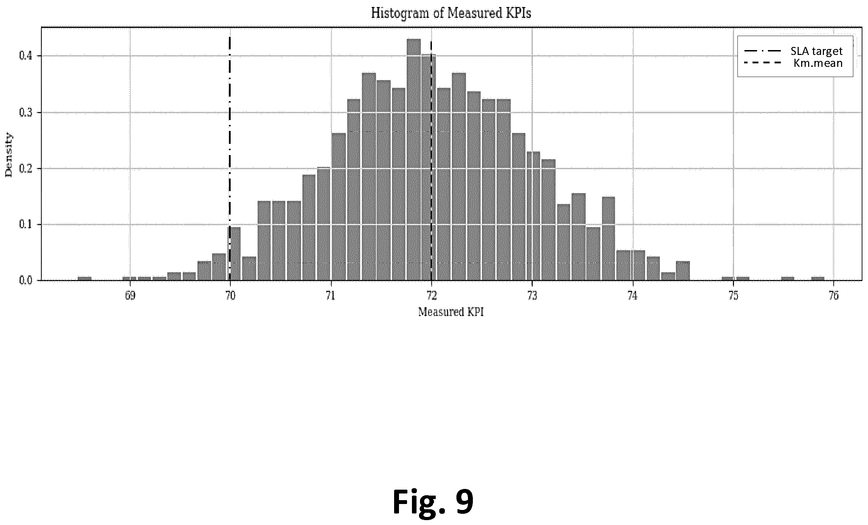

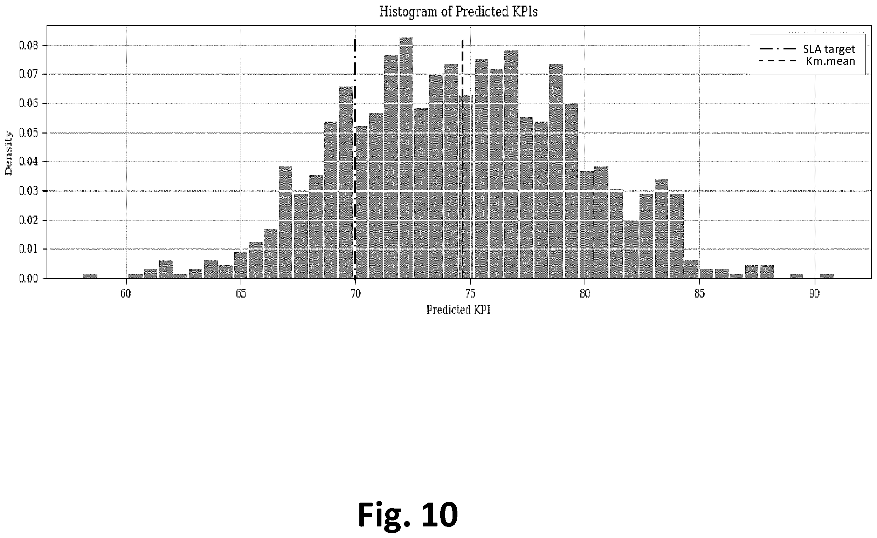

The two main input data are the Service KPI measurements, Figure 9, and Service KPI predictions, Figure 10. These syntactically generated data distributions can be replaced with actual field measurements.

Although not used in this demonstrable example, a set of Service KPI predictions have already been generated from some actual field data using DNN model. About 4000 KPI samples were used which generated predictions with +/-21% accuracy. That initial computation will be followed with more detailed analysis.

In Figures 9 and 10, the dot-dash line indicates the target KPI value defined by the SLA.

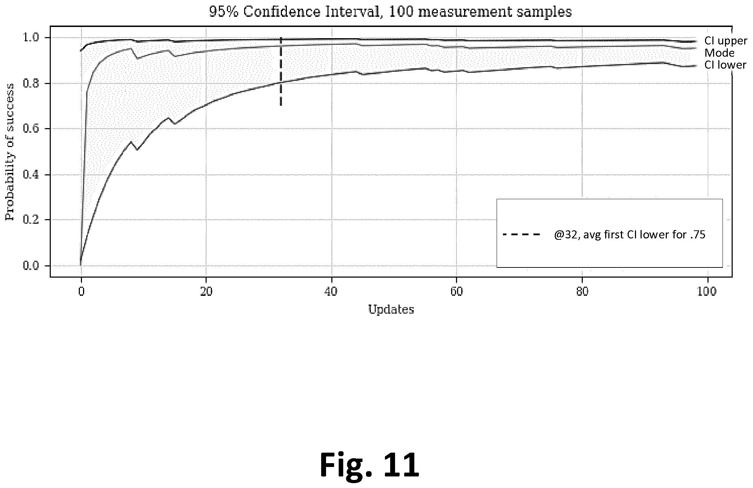

Figure 11 shows an example of the CI computation results. The x-axis is the number of samples used for each iteration of the computation. The y-axis shows the upper and lower probability range for the 95% CI. The vertical line in Figure 10 shows how many data samples would be needed to reach the lower CI point of arbitrarily chosen p .75, which was 37 given averaging over the input data set. Note that this chart only shows a single instance, the displayed legend is not read off this chart.

In an NDT product implementation, the Metric Query microservice could make the real network measurement data available with location reference to the grid cells as explained earlier.

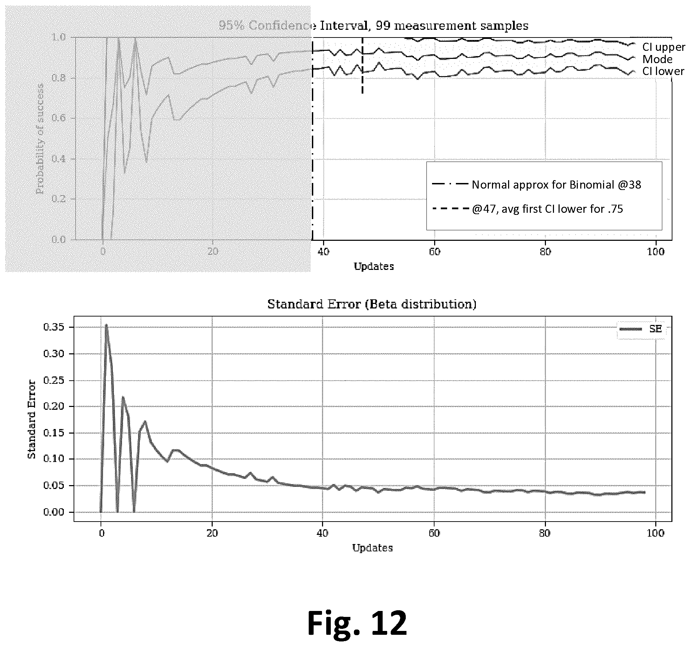

Figure 12 shows another example of the CI computation results. Similar to Figure 11, the x-axis is the number of samples used for each iteration of the computation. The y-axis shows the upper and lower probability range for the 95% CI. The vertical dot-dash line in Figure 12 shows how many data samples would be needed to reach the lower CI point of arbitrarily chosen p .75, which was 47 given averaging over the input data set. Note that this chart only shows a single instance, the displayed legend is not read off this chart.

According to the present disclosure, the following technical advantages are achieved.

Features described as part of this disclosure will allow applications such as an NDT to show the quantification of SLA assurance predictions. As the users of such products look at an Area of Interest (such as a factory floor or geography of an open mine), they will be able see at which locations the SLA assurance is satisfied with what probability. The user will be able to set the granularity of location points displayed on the screen. The granularity will be driven by the density of measurements for each computation. The dynamic grid structure will provide this capability by restructuring the dynamic grid elements. The user will do these adjustments based on the desired level of accuracy for the CI computations. For example, as described above, given a set of data, if a location point has approximately 32 measurement samples, the lower CI probability bound would expected to be .75.

Use of the Bayes' theorem allows accurate computation of CI probabilities, which otherwise would be erroneous without having any clear indication of being so.

The KPI input data set is significantly increased by generating KPI predictions from KPI measurements using DNN regression techniques.

Computer readable memories, as disclosed herein, may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories may be means for any of the methods as described herein. Processors, as disclosed herein, may be of any type suitable to the local technical environment, and may include one or more of general purpose computers, special purpose computers, microprocessors, digital signal processors (DSPs) and processors based on a multicore processor architecture, as non-limiting examples. The processors may be means for performing any of the methods as described herein.

In accordance with one example embodiment, an apparatus may comprise: circuitry configured to perform any of the methods as described herein.

In accordance with one example embodiment, an apparatus may comprise: processing circuitry; memory circuitry including computer program code, the memory circuitry and the computer program code configured to, with the processing circuitry, enable the apparatus to perform any of the methods as described herein.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for performing any of the methods as described herein.

In accordance with one example embodiment, a non-transitory computer-readable medium comprising program instructions stored thereon which, when executed with at least one processor, cause the at least one processor to perform any of the methods as described herein.

It should be understood that the foregoing description is only illustrative. Various alternatives and modifications can be devised by those skilled in the art. Accordingly, the description is intended to embrace all such alternatives, modification and variances.

It is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the CU, the DU, etc.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

### List of abbreviations:

- 3GPP: third generation partnership project
- AGV: Autonomous guided vehicles
- AoI: Area of Interest
- BPI: Business performance indicator
- CDF: Cumulative distribution function
- CMF: Cumulative mess function
- CI: Confidence Interval
- DNN: Deep Neural Network
- EnSo: Enterprise Solutions
- IID: Independent and identically distributed random variables
- KPI: key performance indicator
- ML: machine learning
- NDT: Network Digital Twin
- PDF: Probability distribution function
- pKPI: Predicted KPI: rKPI, sKPI predictions based on functional mappings of KPI measurements typically based on cognitive models
- PMF: Probability mess function
- QoS: quality of service
- rKPI: Radio KPIs: QoS measurements indicating the wireless access network performance for L1 and L2 protocol operations, such as RSRQ, RSRP
- RSRP: Reference Signal Received Power
- RSRQ: Reference Signal Received Quality
- SINR: Signal to interference noise ratio
- sKPI: Service KPIs QoS/QoE measurements indicating the application-level operations, such as Throughput, Latency for QoS, and such as Connection reliability for QoE
- SLA: service level agreement
- SLAp: SLA Assurance Probability: Confidence Intervals of meeting the Service KPI targets based on conditional joint probability computations.
- UE: User endpoint

## Claims

1. A method for evaluating performance of a network comprising a plurality of endpoint devices configured within a region of interest and at least one operations node, wherein the plurality of endpoint devices and the at least one operations node are configured to establish communication to each other for carrying out a service provided by an application installed on at least one of the plurality of endpoint devices,
wherein the evaluation is based on determining a confidence interval for a probability of at least one performance indicator associated with the communication between the plurality of endpoint devices and the at least one operations node meeting a pre-determined target, wherein the at least one performance indicator comprises at least one signal-level indicator and/or at least one network-level indicator,
wherein the method comprises:
obtaining, based on communication-related data transmitted between the plurality of endpoint devices and the at least one operations node, measured values of the at least one performance indicator associated with one or more from the endpoint devices;
dividing the region of interest into a plurality of grids based on a distribution of densities of said measured values of the at least one performance indicator within the region of interest, wherein the plurality of grids comprises one or more grids of interest each including at least one of said measured values;
for a selected grid of interest, generating predicted values of the at least one performance indicator based on the at least one of said measured values; and
for the selected grid of interest, determining said confidence interval based on said measured values and/or said predicted values and based on at least one target value of the at least one performance indicator set by the pre-determined target for the selected grid of interest.

2. The method according to claim 1, wherein the region of interest is two dimensional and is preferably divided based on quadtree or other clustering methods.

3. The method according to claim 1, wherein the region of interest is three dimensional and is preferably divided based on k-d tree or other clustering methods.

4. The method according to any one of claims 1 to 3, wherein each grid of interest comprises at least a pre-set number of evaluation values including the at least one of said measured values and/or said generated predicted values.

5. The method according to claim 4, wherein a number of evaluation values in each grid of interest is at least a pre-set number that satisfies a statistical accuracy of computations.

6. The method according to any one of claims 1 to 5, wherein the method further comprises additionally determining grids according to different target values of the at least one performance indicator.

7. The UE according to any one of claims 1 to 6, wherein said predicted values are generated further based on types of the one or more endpoint devices associated with said measured values and/or said generated values, and/or further based on information relating to a configuration of said selected grid of interest.

8. The method according to any one of claims 1 to 7, wherein said predicted values are generated based on inputting, into Deep Neural Networks, DNN, the at least one of said measured values and/or types of said one or more endpoint devices and/or information relating to configuration of said selected grid of interest.

9. The method according to claim 8, wherein the DNN has been trained based on minimizing a loss function averaged over pairs of true values of the at least one performance indicator and estimated values of the at least one performance indicator, given training input values of the at least one performance indicator.

10. The method according to any one of claims 1 to 9, wherein the confidence interval is determined based on Bayes' theorem, wherein the confidence interval is determined based on a posterior probability of a target event that the pre-determined target is met, given evidences that the at least one of said measured values and/or said generated predicted values meet the pre-determined target, wherein the posterior probability is determined based on a prior belief relating to a probability of the target event and further based on likelihoods of said evidences given the target event.

11. The method according to claim 10, wherein for the determination of the posterior probability, probabilities of evidences are provided with weighting coefficients, wherein preferably a weighting coefficient for probabilities that said predicted values meet the pre-determined target is smaller than a weighting coefficient for probabilities that said measured values meet the pre-determined target.

12. The method according to claim 10 or claim 11, wherein a probability distribution associated with the prior belief and a probability distribution of said likelihoods are conjugate distributions.

13. The method according to claim 12, wherein the probability distribution associated with the prior belief is a Beta distribution, the probability distribution of said likelihoods is a Bernoulli or Binomial distribution, and a probability distribution of the posterior probability is a Beta distribution.

14. An apparatus, configured to carry out the method according to any one of claims 1 to 13.

15. A computer program comprising instructions for causing an apparatus to perform the method according to any one of claims 1 to 13.
